# FASCICULE DE BREVET EUROPEEN

(11) **EP 3 794 683 B1**
(45) Date de publication et mention de la délivrance du brevet: **07.05.2025**
(21) Numéro de dépôt: 19723810.8
(22) Date de dépôt: 17.05.2019
(51) Int. Cl.: H01R 11/28, H01M 50/569, H02J 7/00, H01R 24/00

(54) **FICHE DE CONNEXION ELECTRIQUE POUR MODULE DE BATTERIE ET KIT DE CABLAGE CORRESPONDANT**
ELEKTRISCHER ANSCHLUSSSTECKER FÜR EIN BATTERIEMODUL UND ENTSPRECHENDER VERKABELUNGSSATZ
ELECTRIC CONNECTION PLUG FOR A BATTERY MODULE AND CORRESPONDING CABLING KIT

(30) Priorité: 18.05.2018 FR 1854203; 25.09.2018 FR 1858738
(43) Date de publication de la demande: 24.03.2021
(73) Titulaire: E-Xteq Europe, 78640 Saint-Germain-de-La-Grange (FR)
(72) Inventeur: BREBANT, Morgan, 78950 GAMBAIS FRANCE (FR); YU, Justin, 78340 LES-CLAYES-SOUS-BOIS (FR); PAILHAS, Pierre, 78340 LES-CLAYES-SOUS-BOIS (FR); FONTENEAU, Philippe, 78340 LES-CLAYES-SOUS-BOIS (FR)
(74) Mandataire: Vidon Brevets & Stratégie
(86) Numéro de dépôt international: PCT/EP2019/062762
(87) Numéro de publication internationale: WO 2019/219893

(56) Documents cités:
- WO-A1-01/69726
- CN-U- 204 538 142
- US-B1- 7 029 338

## Description

### 1. Domaine de l'invention

L'invention se rapporte au domaine des batteries électriques de véhicules automobiles.

Plus précisément, l'invention se rapporte notamment au domaine de la connexion électrique pour la maintenance des batteries électriques.

L'invention porte spécifiquement sur la connectique utilisée pour la mise à niveau de la charge électrique d'un module de batterie au sein d'un pack-batterie, typiquement sur des moyens de connexion réversibles à usage répété, utilisables notamment pour la charge et/ou la décharge d'une batterie, en particulier dans le but de la mise à niveau de la charge électrique d'un module de batterie au sein d'un pack-batterie, par exemple lorsque ce module remplace un module de batterie défectueux.

L'invention est généralisable à d'autres situations dans lesquelles on a besoin d'assurer des connexions électriques autorisant la circulation de courant de charge vers une batterie, et plus particulièrement lorsque ces connexions sont temporaires, pour des opérations de charge initiale, de contrôle et/ou d'entretien.

### 2. Art antérieur

Les véhicules électriques et hybrides suscitent un fort intérêt et sont actuellement de plus en plus développés par les constructeurs automobiles.

Ces véhicules mettent en œuvre un pack-batterie généralement composé de plusieurs modules de batterie juxtaposés et reliés entre eux dans un boîtier de protection.

Chaque module comprend un certain nombre de cellules de stockage d'énergie électrique, ou « cellules électriques », accolées et connectées entre elles, qui peuvent prendre une forme cylindrique, prismatique, ou de sachet (en anglais « *pouch-cell* »).

Par ailleurs, au sein du module, les cellules électriques, qui sont généralement montées en série, sont accessibles individuellement via des circuits de contrôle - typiquement de simples câblages - comprenant notamment la possibilité de mesurer leur tension individuelle de charge, ainsi que, dans certains cas, d'autres paramètres de chaque cellule et de chaque module, comme leur température.

Au cours de la vie d'un pack-batterie, il peut arriver qu'un module devienne défectueux : dans ce cas, il est nécessaire de l'extraire du pack-batterie et de le remplacer par un module neuf pour assurer le fonctionnement de la batterie.

Or, au moment de son installation, le module neuf peut présenter un niveau de charge, ou tension électrique, différent des autres modules du pack-batterie, ce qui n'est pas souhaitable, car cela entraîne un niveau d'usure et une vitesse de déchargement non homogènes au sein du pack-batterie.

La tension électrique de ce module neuf doit alors être nivelée (en anglais « *levelized* ») par rapport à la tension électrique des autres modules du pack-batterie, de sorte à présenter un niveau de charge équivalent.

En pratique, le module doit être soumis à une opération de charge ou décharge différentielle, afin de rétablir un niveau de charge uniforme au sein des différents modules.

La mise à niveau, « égalisation », ou nivellement, (en anglais « *levelization* ») de la charge d'un module parmi une série de modules d'un pack-batterie peut également être opérée sur un module non-défectueux présentant un niveau de charge et/ou de tension différent des autres modules, et sans que ce module soit donc nécessairement remplacé.

Les cellules électriques qui composent le module doivent alors être contrôlées électroniquement afin de déterminer si le niveau de charge souhaité est atteint.

Afin de mener à bien les opérations de nivellement de charge et de contrôle de la charge, il est nécessaire d'utiliser une station de contrôle et de nivellement de charge des modules (en anglais « *module balancer* »), à laquelle le module peut être connecté.

Afin de réaliser le nivellement de charge, un câble de nivellement de charge en Y à trois branches, ou câble « deux en un », est typiquement utilisé entre le module et la station de contrôle et de nivellement de charge.

Par ailleurs, afin de réaliser la vérification et le contrôle électronique (en anglais « monitoring ») de l'état de charge des cellules électriques, un câble de contrôle électronique est classiquement utilisé entre le module et la station de contrôle et de nivellement de charge. Le document CN 204 538 142 U décrit un connecteur pour une batterie au lithium de grande capacité selon le préambule de la revendication 1.

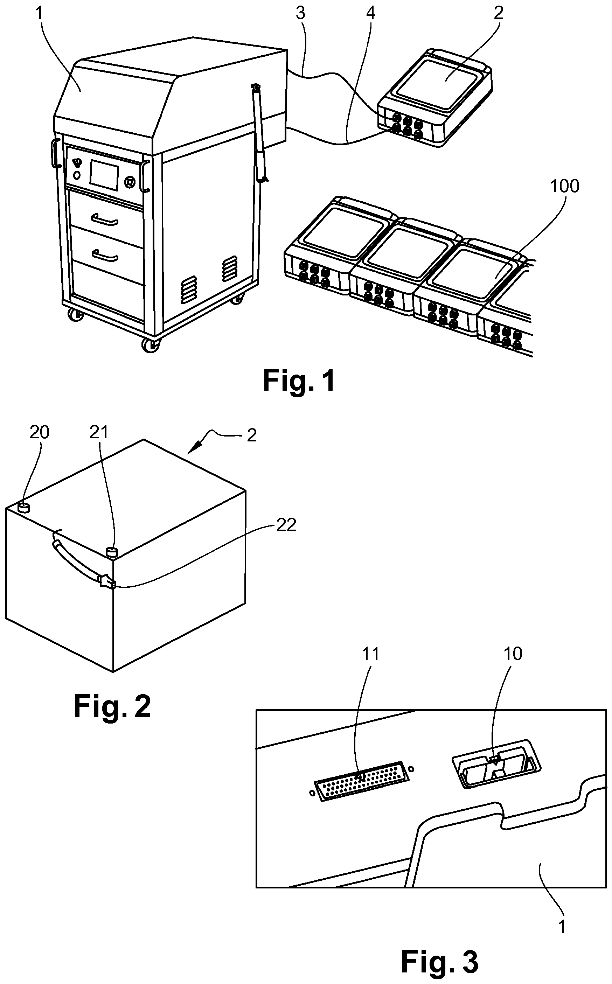

Ainsi, comme illustré sur la **figure 1****,** une installation de contrôle et de nivellement de charge de module comprend au moins un module de batterie 2, issu d'un pack-batterie 100, relié à une station de contrôle et de nivellement de charge 1 par l'intermédiaire de deux câbles, un premier câble, dit câble de nivellement de charge 3 et un second câble, dit câble de contrôle électronique 4.

Une station de contrôle et de nivellement de charge comporte classiquement une interface de connexion, illustré sur la **figure 3****,** présentant d'une part au moins un premier connecteur de charge 10 destiné à coopérer avec une extrémité d'une première branche du câble de nivellement de charge 3, plus précisément la tige du Y, et d'autre part au moins un second connecteur 11 destiné à coopérer avec une extrémité du câble de contrôle électronique 4.

Le module de batterie, quant à lui, comporte d'une part deux bornes de charge 20, 21, positive et négative, illustrées sur la **figure 2** destinées à coopérer avec les extrémités des deux autres branches du câble de nivellement de charge 3, et d'autre part un connecteur de contrôle électronique 22 destiné à coopérer avec l'extrémité du câble de contrôle électronique 4.

Le module 2 illustré sur la **figure 2** constitue seulement un exemple de module de batterie. Il existe de nombreux types de modules, conçus par divers constructeurs automobiles, qui peuvent être très différents les uns des autres, mais qui présentent toujours à la fois au moins deux bornes de charge et au moins un connecteur de contrôle électronique.

Les bornes de charge 20, 21 d'un module se présentent généralement sous la forme d'orifices taraudés ou de tiges filetées.

Les branches du câble de nivellement de charge 3 présentent quant à elles généralement une extrémité filetée (respectivement taraudée), de façon à être solidarisées mécaniquement et électriquement, de façon réversible, par vissage avec les parties complémentaires (taraudées et/ou vissées) des bornes de charge 20, 21.

Toutefois, cette opération de vissage entraîne classiquement une torsion interne au câble, ce qui peut à terme endommager les fils électriques, et compromettre l'opération de nivellement de la charge du module de batterie.

Il existe donc un besoin de fournir une solution technique qui permette à un opérateur de visser les extrémités des branches du câble, sans que soit créée de torsion interne au câble.

### 3. Résumé de l'invention

A cet effet, l'invention propose une fiche de connexion électrique d'un câble électrique à une borne électrique selon la revendication 1.

Lorsque la fiche de connexion est « au repos », c'est-à-dire lorsqu'elle n'est pas manipulée par un opérateur pour son montage sur un module de batterie (respectivement démontage), les moyens de rappel élastique permettent d'une part de maintenir fermement la liaison mécanique et électrique entre l'embout, plus généralement la fiche de connexion, et la borne électrique du module afin que le contact électrique et mécanique soit bien assuré ; et d'autre part de maintenir fixe par rapport à l'embout, grâce à une force de friction, l'élément de connexion du câble, afin qu'il ne puisse pas librement tourner autour de celle-ci au cours des opérations de nivellement de charge du module, ce qui pourrait blesser l'opérateur ou gêner les manœuvres.

Lorsque la fiche de connexion est « en utilisation », c'est-à-dire montée (respectivement démontée) par un opérateur sur le module de batterie, celui-ci fait tourner conjointement la molette et l'embout en comprimant le ressort de telle sorte que la force de friction est surpassée : l'ensemble formé par l'embout et la molette peut alors être pivoté sans que l'élément de connexion du câble soit entraîné à son tour en rotation.

Ce dernier, et par conséquent le câble, reste alors immobile par rapport à l'embout. Cet agencement permet également de rigidifier la fiche de connexion, ce qui facilite l'opération de vissage d'une main par un opérateur.

Selon un autre aspect de l'invention, lesdits moyens de rappel élastique sont constitués par un ressort hélicoïdal de rappel monté en pression autour de l'embout entre ladite molette et ledit élément conducteur.

Selon un autre aspect de l'invention, ladite seconde extrémité dudit élément conducteur est montée autour de l'embout entre ledit ressort hélicoïdal et une butée formée entre les première et deuxième extrémités de l'embout.

Les moyens de rappel exercent une poussée sur l'élément de connexion du câble qui est repoussé contre la butée de manière à assurer le contact électrique. Par ailleurs, l'élément de connexion est ainsi plaqué contre la butée, ce qui crée la force de friction qui permet de l'empêcher de pivoter autour de l'embout lorsque la fiche de connexion est « au repos ».

Selon un autre aspect de l'invention, lesdits moyens de liaison de l'embout avec ladite borne comprennent un filetage au niveau de ladite première extrémité dudit embout apte à coopérer avec un taraudage complémentaire ménagé au niveau de ladite borne.

Dans ce cas, lesdits moyens de liaison dudit embout avec ladite borne peuvent comprendre une fixation de type baïonnette ou une fixation par enfichage de l'embout dans ou sur ladite borne puis verrouillage par un capuchon vissé placé autour dudit embout.

Selon une variante de l'invention, lesdits moyens de liaison de l'embout avec ladite borne comprennent un taraudage au niveau d'une extrémité (par exemple la première extrémité) dudit embout apte à coopérer avec un filetage complémentaire ménagé au niveau de ladite borne, ledit embout étant solidarisé à ladite borne par vissage sur ladite borne.

La liaison de l'embout avec la borne s'effectue donc par vissage de l'embout par rapport à la borne électrique. L'extrémité de l'embout peut être filetée, si la borne présente un taraudage. L'extrémité de l'embout peut présenter un orifice taraudé, si la borne présente une tige filetée.

Selon un autre aspect de l'invention, ladite molette est désolidarisable dudit embout, et la surface de l'embout (notamment au niveau de la deuxième extrémité) comprend au moins un méplat, destiné à coopérer avec l'extrémité d'au moins une pièce de blocage vissée dans ladite molette.

Dans ce cas, ledit embout peut comprendre un pion formant la deuxième extrémité dudit embout, ledit ressort hélicoïdal de rappel étant monté en pression autour du pion, le pion comportant ledit au moins un méplat, destiné à coopérer avec l'extrémité d'au moins une pièce de blocage vissée dans ladite molette.

L'ensemble constitué par le méplat et la pièce de blocage forme un système de solidarisation de la molette avec l'embout simple et peu coûteux à produire.

Selon un autre aspect de l'invention, la surface externe de ladite molette présente des irrégularités de préhension, telles que des stries ou équivalents.

Ceci rend la molette plus ergonomique et facilite la prise en main par l'opérateur.

Selon un autre aspect de l'invention, ledit élément conducteur de connexion du câble comprend une patte comportant un premier orifice de connexion audit câble, dans ladite première extrémité dudit élément conducteur, et un second orifice de connexion audit embout, dans ladite seconde extrémité dudit élément conducteur.

Le second orifice de connexion audit embout peut, selon un mode de réalisation de l'invention, être connecté audit pion.

Selon un exemple ne faisant pas partie de l'invention, l'embout comprend au moins une pièce intermédiaire et une pièce de contact, lesdites pièces étant configurées pour coopérer avec une cosse de câble et avec une borne de batterie.

Selon un exemple ne faisant pas partie de l'invention, une fiche de connexion électrique d'un câble électrique à une borne électrique d'un module de batterie, comprenant :
- un embout conducteur comprenant au moins deux parties distinctes dont une extrémité présente des moyens de liaison mécanique et électrique avec ladite borne électrique, et dont une extrémité présente une molette d'actionnement en rotation d'au moins une des parties dudit embout et
- un élément conducteur de connexion dudit câble électrique, pourvu de moyens de solidarisation mécanique et électrique dudit élément conducteur avec ledit câble électrique, et pourvu de moyens de liaison mécanique et électrique audit embout assurant une liberté de rotation d'au moins une partie de l'embout par rapport audit câble (notamment à la cosse dudit câble),
la solidarisation/désolidarisation desdits moyens de liaison de ladite fiche à ladite borne étant réalisée par un mouvement de rotation imprimé par l'intermédiaire de ladite molette, sans entraîner en rotation ledit câble électrique et/ou l'élément conducteur de connexion audit câble.

Selon un exemple ne faisant pas partie de l'invention, ledit embout comprend une tige, une pièce intermédiaire et/ou une pièce de contact.

Selon une autre caractéristique possible, les moyens de liaison mécanique et électrique avec ladite borne électrique sont formés par la tige ou la pièce de contact.

Selon une autre caractéristique possible, la molette est montée sur la pièce intermédiaire.

Selon une autre caractéristique possible, les moyens de solidarisation mécanique et électrique dudit élément conducteur avec ledit câble électrique sont formés soit par la pièce intermédiaire et la pièce de contact, soit par la pièce intermédiaire, la pièce de contact et la tige.

Selon une autre caractéristique possible, la pièce intermédiaire et la pièce de contact sont configurées pour coopérer avec une cosse de câble et avec une borne de batterie.

Selon une autre caractéristique possible, la tige est surmontée d'une molette.

Selon une autre caractéristique possible, la tige, la pièce intermédiaire et/ou la pièce de contact sont réalisés en un matériau électriquement conducteur
Selon une autre caractéristique possible, la pièce de contact comprend une partie centrale, sensiblement cylindrique, configurée pour qu'une cosse de câble vienne, en position montée, entourer ladite partie centrale (ladite cosse pouvant tourner autour de la partie centrale jusqu'à la mise en contact de la partie de contact avec ladite borne de la batterie).

Selon une autre caractéristique possible,
Selon une autre caractéristique possible, la pièce intermédiaire présente un trou traversant débouchant dans une gorge de retenue, la pièce de contact présentant une couronne configurée pour s'engager dans ladite gorge de retenue.

La gorge de retenue limite ainsi le débattement de la pièce de contact selon l'axe longitudinal de l'embout.

Selon une autre caractéristique possible, la pièce intermédiaire et la pièce de contact sont configurés pour être entrainées en rotation conjointement par l'intermédiaire de la molette (par exemple par l'intermédiaire de formes, telles que des méplats, disposés sur chacune des pièces coopérant l'une avec l'autre).

Selon une autre caractéristique possible, la rotation des pièces intermédiaire et de contact, par l'intermédiaire de la molette, fixe (ou solidarise) la cosse du câble contre la pièce intermédiaire et la pièce de contact (notamment contre l'extrémité inférieure de la pièce intermédiaire et contre une collerette de la pièce de contact).

L'invention concerne également un kit de câblage de charge pour module de batterie comprenant un jeu d'au moins deux câbles électriques de charge, muni chacun d'une fiche de connexion électrique tel que décrit ci-dessus.

### 4. Figures

D'autres caractéristiques et avantages apparaîtront plus clairement à la lecture de la description détaillée suivante de modes de réalisation particuliers de l'invention, donnés à titre de simples exemples illustratifs et non limitatifs, et des dessins annexés, parmi lesquels :
- la **figure 1** illustre une station de contrôle et de nivellement de la charge d'un module de batterie connectée à un module de batterie par l'intermédiaire d'un premier câble de nivellement de charge, et d'un second câble de contrôle électronique de la charge ;
- la **figure 2** illustre un exemple de module de batterie, comprenant d'une part deux bornes électriques de charge et d'autre part un connecteur de contrôle électronique ;
- la **figure 3** illustre l'interface d'une station de contrôle et de nivellement de charge, comprenant au moins un connecteur de charge dédié au nivellement de charge et au moins un connecteur dédié au contrôle électronique ;
- la **figure 4** illustre un câble de nivellement de charge en Y, comprenant une branche principale destinée à être reliée au connecteur de charge de la station et deux branches secondaires de câble destinées à être reliées aux bornes électriques du module par l'intermédiaire d'une fiche de connexion selon l'invention ;
- la **figure 5** est une vue éclatée d'une fiche de connexion selon l'invention ;
- la **figure 6** est une vue de la fiche de connexion de la figure 5, assemblée ;
- la **figure 7** est une vue de la fiche de connexion selon un deuxième mode de réalisation de l'invention ;
- la **figure 8** est une vue de côté de la fiche de connexion selon le deuxième mode de réalisation de l'invention, et
- la **figure 9** illustre un exemple de module de batterie, comprenant d'une part deux bornes électriques de charge et d'autre part un connecteur de contrôle électronique, selon un deuxième mode de réalisation, adapté pour les fiches de connexion des figures 7 et 8 ;
- la **figure 10** représente une vue éclatée d'une fiche de connexion selon un exemple ne faisant pas partie de l'invention;
- la **figure 11** est une vue de la fiche de connexion de la figure 10 sous forme assemblée.

### 5. Description détaillée

### 5.1 Principe général de l'invention

L'invention propose donc une solution technique simple à mettre en œuvre pour permettre d'éviter la torsion de l'extrémité du câble de nivellement de charge au moment de sa mise en place sur les bornes du module.

Pour de faire, l'invention propose de mettre en œuvre une fiche de connexion électrique entre une borne électrique du module de batterie et l'extrémité du câble de nivellement de charge, qui présente un embout que l'opérateur peut faire tourner de façon à le solidariser avec la borne, sans que le câble soit entraîné en rotation.

Pour cela, un élément auquel le câble est solidarisé est monté libre en rotation autour de l'embout, de façon à ce que le câble de nivellement de charge fixé sur cet élément de maintien reste immobile lorsque l'embout effectue un mouvement de rotation.

### 5.2 Description d'un premier mode de réalisation de l'invention

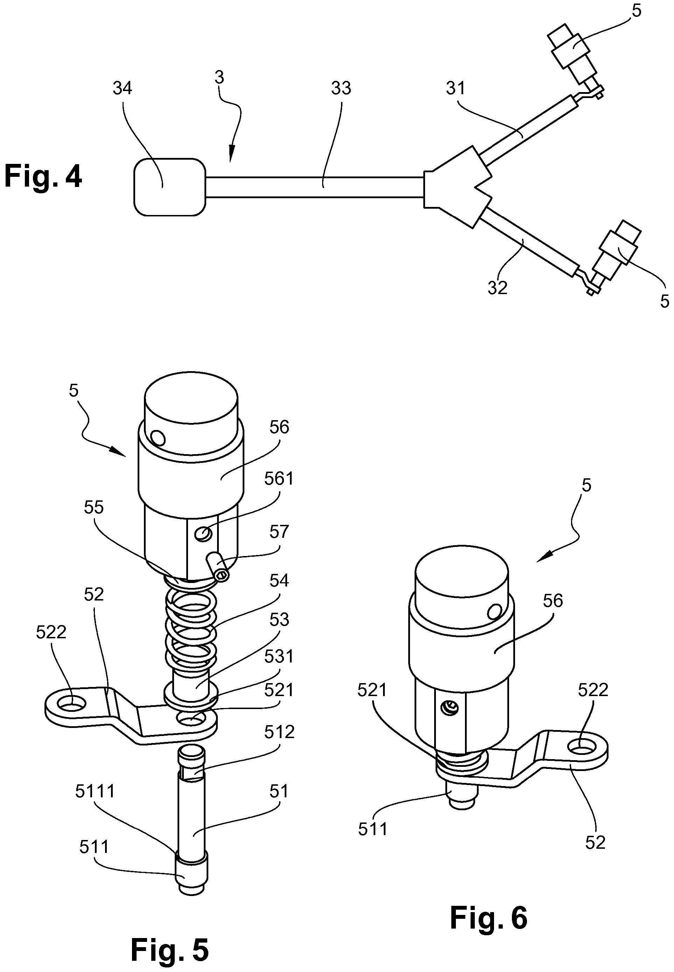

La **figure 4** illustre un câble d'égalisation / nivellement de charge 3 présentant une forme sensiblement en Y, dit « câble deux en un ».

Ce câble de nivellement de charge 3 est en fait formé de deux câbles 31, 32 formant respectivement les deux branches du Y, regroupés à l'intérieur d'une gaine de façon à former une troisième branche 33.

L'extrémité de la troisième branche 33 comporte un connecteur 34 destiné à coopérer avec le connecteur de charge 10 de la station de contrôle et de nivellement de charge 1.

L'extrémité des deux branches 31, 32 est destinée à être connectée à deux bornes électriques 20, 21, respectivement positive et négative, d'un module de batterie dont le niveau de charge, autrement dit la tension, doit être modifié.

Pour cela, l'extrémité de chacune des deux branches 31, 32 est rendue solidaire d'une fiche de connexion électrique 5, montée, en particulier vissée, sur le module de batterie 2, permettant de lier électriquement le câble de nivellement de charge 3 et le module de batterie 2.

Cette fiche de connexion électrique 5 est décrite ci-après, en relation avec les **figures 5 et 6****.**

Elle comporte un embout 51, qui est dans ce mode de réalisation une tige principale 51, dont l'extrémité inférieure est destinée à être connectée avec la borne 20, 21 d'un module de batterie.

La tige, ou à tout le moins sa partie inférieure, est constituée en matériau conducteur, le contact électrique entre la tige et la borne du module étant généralement assuré par les filets de vissage et/ou par une surface annulaire d'appui de la tige sur une surface de réception complémentaire de la borne du module de batterie.

L'extrémité inférieure de la tige 51 présente à cet effet une surépaisseur 511 dont la surface périphérique est filetée (non représenté), ce filetage étant destiné à coopérer avec un taraudage prévu dans un orifice formant la borne électrique 20, 21 du module de batterie tel que représenté sur la **figure 2****.**

Dans le cas où la borne électrique 20 21 du module se présente sous la forme d'une tige filetée, l'extrémité inférieure de la tige 51 peut présenter un orifice taraudé (deuxième mode de réalisation).

Tout autre type de fixation en rotation, impliquant une rotation de la tige même légère, peut être utilisé dans le cadre de l'invention. Par exemple, la fixation entre la tige 51 et la borne 20, 21 peut être du type baïonnette.

La borne 20, 21 du module de batterie, qu'elle soit mâle (deuxième mode de réalisation) ou femelle (premier mode de réalisation), peut aussi présenter une forme tronconique sur laquelle la tige 51 vient s'enficher, le serrage étant assuré par un capuchon vissé.

L'extrémité supérieure de la tige 51 présente quant à elle trois méplats 512 se faisant face, formés régulièrement sur son pourtour.

Cette extrémité supérieure de la tige 51 est engagée à l'intérieur d'une molette 56, ou bouton à molette, présentant un orifice de forme complémentaire.

La tête de la molette 56 (ou portion haute de la molette) est illustrée avec une forme circulaire, mais pourrait prendre d'autres formes, par exemple parallélépipédique

Dans sa version circulaire, la surface extérieure de la tête de la molette est avantageusement pourvue de stries, de cannelures, ou de tout autre type de modelage de surface, sous forme régulière ou irrégulière, permettant de faciliter la préhension et la manœuvre par l'utilisateur.

Le corps de la molette 56 (situé sous la tête de la molette) est pourvu de trois perçages 561 (dont un seul est représenté), régulièrement répartis sur sa périphérie, qui coïncident avec le positionnement des méplats 512 de l'extrémité haute de la tige 51.

Trois vis à fond plat 57 permettent alors de solidariser la molette 56 et la tige 51.

Selon un autre mode de réalisation particulier, la molette est en matériau isolant, par exemple un matériau plastique et/ou macro-moléculaire, surmoulé en prise sur des aspérités ou des ailettes ménagées dans - ou rapportées sur - l'extrémité supérieure de la tige.

La molette 56 forme une poignée pour l'opérateur. Lorsqu'elle est actionnée en rotation, lors du montage de la fiche de connexion électrique 5 sur le module de batterie 2, elle entraîne la tige 51 en rotation qui, coopérant en rotation avec la borne 20, 21 du module de batterie, est vissée (respectivement dévissée quand la molette est tournée dans le sens inverse en vue du démontage de la fiche de connexion).

Par ailleurs, une patte 52, ou languette, en cuivre est montée libre en rotation autour de la tige 1.

De forme sensiblement allongée, elle présente à une de ses extrémités un premier orifice 521 où la tige 51 est introduite, et à l'autre de ses extrémités un second orifice 522 où le câble de nivellement de charge 3 est solidarisé.

Plus précisément, le câble de nivellement de charge 3 se termine par un étrier en matériau conducteur qui est solidarisé à la patte 52 par l'intermédiaire d'une vis insérée dans l'orifice 522. Afin de garantir à la fois la solidarisation mécanique et la connexion électrique, les deux pièces (câble et patte) sont avantageusement soudées ou brasées l'une à l'autre, en fonction de la nature de leurs matériaux conducteurs respectifs, tout en respectant les compatibilités entre matériaux.

Comme illustré sur les **figures 5 et 6****,** la patte 52 présente un profil en Z, les deux orifices 521, 522 et la portion de patte 52 étant alors positionnés selon des plans parallèles, légèrement à distance l'un de l'autre.

La patte 52 se positionne naturellement par une de ses faces, au niveau de l'orifice 521, contre le rebord 5111 de la surépaisseur 511 formée en bas de la tige 51, qui forme ainsi une butée.

Afin qu'un contact permanent soit maintenu entre la patte 52 et le rebord 5111, un ressort de pression 54, de préférence hélicoïdal, est monté autour de la tige, au-dessus de la patte 52.

Dans la configuration assemblée (**figure 6**) de la fiche de connexion électrique 5, le ressort 54 est légèrement comprimé.

Par conséquent, la patte 52 se trouve comprimée entre le rebord 5111 de l'extrémité inférieure de la tige 51 et le ressort 54.

Une rondelle guide 53 et une rondelle plate 55 sont montées de part et d'autre du ressort 54, autour de la tige 51.

La rondelle guide 53 forme sensiblement un tube muni d'une collerette 531 orientée vers la patte 52, et fait office de « pièce martyre » : la collerette 531 offre en effet une surface de contact direct pour le ressort 54, ce qui permet d'éviter tout endommagement de la patte 52 en cuivre, qui est un matériau plus fragile et abrasable.

Le ressort de pression 54 a plusieurs fonctions.

Il permet premièrement de plaquer la patte 52 contre la butée de la tige 51, par l'intermédiaire de la rondelle 53, ce qui crée entre la rondelle 53, la patte 52 et la tige 51 une force de friction telle que la patte 52 est immobilisée lorsque la fiche de connexion électrique 5 n'est pas manipulée par un opérateur, autrement dit « au repos ». Ainsi, la patte 52 n'est pas susceptible de tourner librement autour de la tige, ce qui pourrait gêner l'opérateur durant l'opération de nivellement de charge du module de batterie, voire le blesser.

Par ailleurs, il permet de produire, lorsque la fiche de connexion 5 est montée sur le module de batterie (configuration « au repos »), de créer une force d'extension, dans la direction axiale de la tige 51 de façon à mettre en tension la zone de liaison entre la tige 51 et la borne 20, 21. De cette façon, les risques éventuels de dévissage de la tige 51 par rapport à la borne 20, 21 sont minimisés.

Enfin, cette force d'extension à l'intérieur de la fiche de connexion électrique 5, empêche toute rotation indésirable de la molette 56 par rapport à la tige 51, issue d'un éventuel jeu entre ces deux éléments, ce qui rigidifie la fiche de connexion électrique 5 et facilite ainsi l'opération de vissage d'une seule main.

Lorsque la fiche de connexion 5 est montée dans la borne 20, 21 du module, il se produit, au travers du câble de nivellement de charge 3, une circulation de courant électrique depuis la station de contrôle et de nivellement 1 vers le module 2, et vice versa, permettant de réguler le niveau de charge du module.

Afin de monter la fiche de connexion 5 sur le module de batterie (respectivement de la démonter), l'opérateur exerce une pression sur la molette 56 tout en la faisant pivoter.

Dans cette configuration « d'utilisation » de la fiche de connexion 5, le mouvement de rotation de l'ensemble formé par la molette 56 et la tige 51 génère une force supérieure à la force de friction maintenant la patte 52 fixe autour de la tige 51.

Ceci a pour effet que la tige 51 tourne (de manière à être vissée ou dévissée dans ou sur la borne du module) sans que la patte 52 maintenant fixe le câble soit lui-même sujet à une rotation.

Ceci permet par conséquent que le câble de nivellement de charge 3 ne soit pas soumis à une torsion au moment de son branchement électrique à la borne 20, 21.

La fiche de connexion 5 peut être fournie à des opérateurs dans un kit de câblage de charge pour module de batterie comprenant un jeu d'au moins deux câbles de nivellement de charge (3) munis chacun d'une fiche de connexion électrique 5.

Bien évidemment, la solution technique proposée n'est pas limitée au mode de réalisation décrit précédemment et fourni uniquement à titre d'exemple. Elle englobe diverses modifications, formes alternatives et autres variantes que pourra envisager l'homme du métier dans le cadre de la problématique posée.

### 5.3 Description d'un deuxième mode de réalisation de l'invention

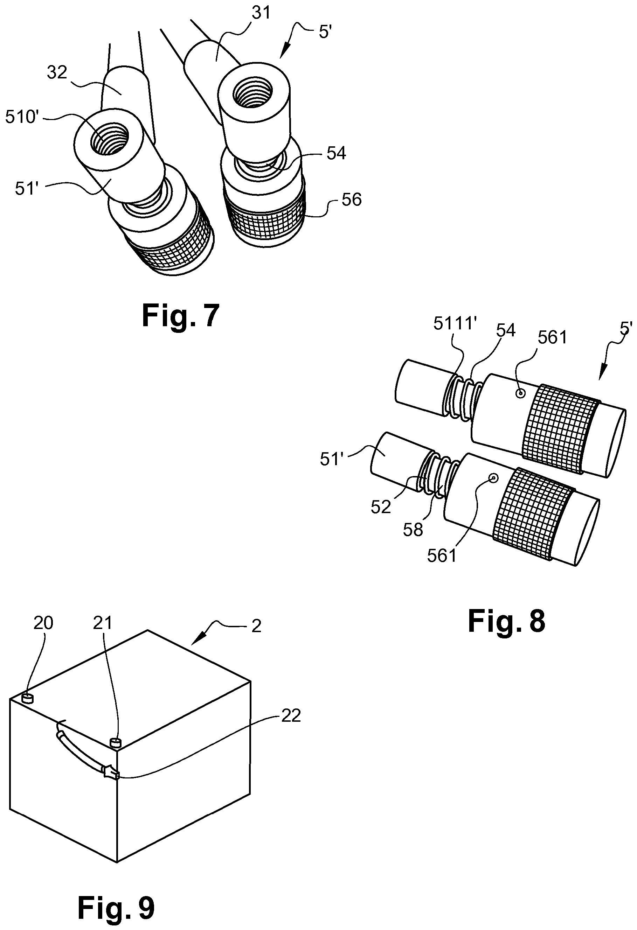

Dans ce deuxième mode de réalisation, le module de batterie 2', dont le niveau de charge doit être modifié, présente deux bornes 20', 21' filetées sur leur pourtour. Un tel module de batterie 2' est illustré en **figure 9****.**

Ainsi, pour connecter les deux branches 31, 32 du câble de nivellement de charge à ces deux bornes 20', 21' dites « males », l'extrémité de chacune des deux branches 31, 32 est rendue solidaire d'une fiche de connexion électrique 5' dite « femelle », montée, en particulier vissée, sur le module de batterie 2', permettant de lier électriquement le câble de nivellement de charge 3 et le module de batterie 2'.

Cette fiche de connexion électrique 5' est décrite ci-après, en relation avec les **figures 7 et 8****.**

Elle comporte un embout 51', dont l'extrémité inférieure est destinée à être connectée avec la borne 20', 21' d'un module de batterie.

Cette extrémité inférieure présente un taraudage 510'.

Plus particulièrement, l'extrémité inférieure peut être connectée avec la borne 20', 21' d'un module de batterie 2' par vissage.

En d'autres termes, les moyens de liaison de l'embout 51' avec la borne 20', 21' comprennent un taraudage au niveau de la première extrémité de l'embout 51' apte à coopérer avec un filetage complémentaire ménagé au niveau de la borne 20', 21'.

Dans ce mode de réalisation, l'embout 51' est ainsi solidarisé par vissage sur la borne 20', 21'.

L'embout 51', ou à tout le moins sa partie inférieure (correspondant notamment à la première extrémité), est constituée en matériau conducteur, le contact électrique entre l'embout et la borne du module étant généralement assuré par les filets de vissage (ou filetage) et/ou par une surface annulaire d'appui de l'embout sur une surface de réception complémentaire de la borne du module de batterie.

La borne 20', 21' du module de batterie, présente une tige filetée, qui peut être de forme cylindrique sur laquelle l'embout 51' vient s'enficher, le serrage étant assuré par un capuchon vissé.

La borne 20', 21' du module de batterie, peut également être de forme tronconique, le serrage étant également assuré par un capuchon vissé.

L'extrémité supérieure, ou deuxième extrémité, de l'embout 51' est formé par un pion 58.

Ce pion 58 peut, selon le mode de réalisation illustré, comprendre trois méplats (non illustrés sur les figures 7 et 8) se faisant face, formés régulièrement sur le pourtour du pion 58.

Ce pion 58 est engagé à l'intérieur d'une molette 56, ou bouton à molette, présentant un orifice de forme complémentaire.

La tête de la molette 56 (ou portion haute de la molette) est illustrée avec une forme circulaire, mais pourrait prendre d'autres formes, par exemple parallélépipédiques

Dans sa version circulaire, la surface extérieure de la tête de la molette est avantageusement pourvue de stries, de cannelures, ou de tout autre type de modelage de surface, sous forme régulière ou irrégulière, permettant de faciliter la préhension et la manœuvre par l'utilisateur.

Le corps de la molette 56 (situé sous la tête de la molette) est pourvu de trois perçages 561 (dont un seul est représenté), régulièrement répartis sur sa périphérie, qui coïncident avec le positionnement des méplats du pion 58 formant la deuxième extrémité de l'embout 51'.

Trois vis à fond plat, similaires aux vis à fond plat du premier mode de réalisation, permettent alors de solidariser la molette 56 et l'embout 51' (par le biais du pion 58).

Selon un autre mode de réalisation particulier, la molette est en matériau isolant, par exemple un matériau plastique et/ou macro-moléculaire, surmoulé en prise sur des aspérités ou des ailettes ménagées dans - ou rapportées sur - l'extrémité supérieure de l'embout 51', c'est-à-dire sur le pion 58.

La molette 56 forme une poignée pour l'opérateur. Lorsqu'elle est actionnée en rotation, lors du montage de la fiche de connexion électrique 5' sur le module de batterie 2', elle entraîne l'embout 51' en rotation qui, coopérant en rotation avec la borne 20', 21' du module de batterie, est vissée (respectivement dévissée quand la molette est tournée dans le sens inverse en vue du démontage de la fiche de connexion).

Par ailleurs, une patte 52, ou languette, en cuivre est montée libre en rotation autour de l'embout 51'.

De forme sensiblement allongée, elle présente à une de ses extrémités un premier orifice où le pion 58 est introduit, et à l'autre de ses extrémités un second orifice où le câble de nivellement de charge est solidarisé.

De même que pour le premier mode de réalisation, la patte 52 présente un profil en Z, les deux orifices et la portion de patte 52 étant alors positionnés selon des plans parallèles, légèrement à distance l'un de l'autre.

La patte 52 se positionne naturellement par une de ses faces, au niveau de l'orifice, contre le rebord 5111' de la surépaisseur formée entre la première et la deuxième extrémité de l'embout 51'.

Afin qu'un contact permanent soit maintenu entre la patte 52 et le rebord 5111', un ressort de pression 54, de préférence hélicoïdal, est monté autour du pion 58, au-dessus de la patte 52.

Lorsque ces éléments sont assemblés, comme illustré en figures 7 et 8, le ressort 54 est légèrement comprimé.

Par conséquent, la patte 52 se trouve comprimée entre le rebord 5111' de l'embout 51' et le ressort 54.

Une rondelle guide (non représentée) et une rondelle plate (non représentée), similaires à celles mises en œuvre dans le premier mode de réalisation, peuvent être montées de part et d'autre du ressort 54, autour de l'embout 51'.

Le ressort de pression 54 a plusieurs fonctions.

Il permet premièrement de plaquer la patte 52 contre la butée de l'embout 51', par l'intermédiaire de la rondelle, ce qui crée entre la patte et l'embout une force de friction telle que la patte 52 est immobilisée lorsque la fiche de connexion électrique 5' n'est pas manipulée par un opérateur, autrement dit « au repos ». Ainsi, la patte 52 n'est pas susceptible de tourner librement autour de l'embout, ce qui pourrait gêner l'opérateur durant l'opération de nivellement de charge du module 2', voire le blesser.

Par ailleurs, il permet de produire, lorsque la fiche de connexion 5' est montée sur le module de batterie 2' (configuration « au repos »), de créer une force d'extension, dans la direction axiale de l'embout 51' de façon à mettre en tension la zone de liaison entre l'embout 51' et la borne 20', 21'. De cette façon, les risques éventuels de désolidarisation, notamment par dévissage, de l'embout 51' par rapport à la borne 20', 21' sont minimisés.

Enfin, cette force d'extension à l'intérieur de la fiche de connexion électrique 5', empêche toute rotation indésirable de la molette 56 par rapport à l'embout 51', issue d'un éventuel jeu entre ces deux éléments, ce qui rigidifie la fiche de connexion électrique 5' et facilite ainsi l'opération de solidarisation d'une seule main.

Lorsque la fiche de connexion 5' est montée sur la borne 20', 21' du module, il se produit, au travers du câble de nivellement de charge, une circulation de courant électrique depuis la station de contrôle et de nivellement vers le module 2', et vice versa, permettant de réguler le niveau de charge du module 2'.

Afin de monter la fiche de connexion 5' sur le module de batterie (respectivement de la démonter), l'opérateur exerce une pression sur la molette 56 tout en la faisant pivoter.

Dans cette configuration « d'utilisation » de la fiche de connexion 5', le mouvement de rotation de l'ensemble formé par la molette 56 et l'embout 51' génère une force supérieure à la force de friction maintenant la patte 52 fixe autour de l'embout 51'.

Ceci a pour effet que l'embout 51' tourne (de manière à être vissé ou dévissé dans ou sur la borne du module) sans que la patte 52 maintenant fixe le câble soit elle-même sujet à une rotation.

Ceci permet par conséquent que le câble de nivellement de charge 3 ne soit pas soumis à une torsion au moment de son branchement électrique à la borne 20', 21'.

### 5.4 Description d'un exemple ne faisant pas partie de l'invention

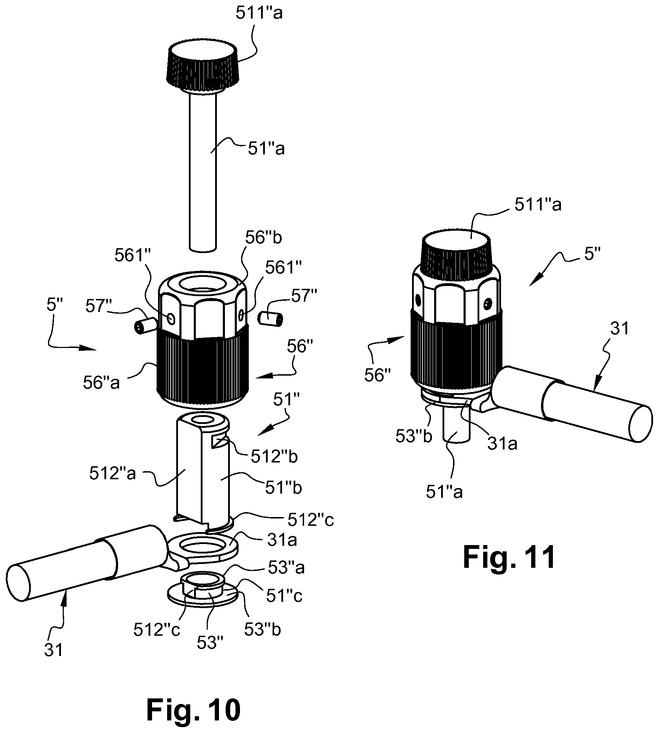

Selon cet exemple qui ne fait pas partie de l'invention la fiche de connexion électrique 5" est décrite ci-après, en relation avec les **figures 10 et 11****.**

La fiche de connexion 5" comporte un embout 51", dont l'extrémité inférieure est destinée à être connectée avec une borne de type femelle 20, 21 ou de type mâle 20' ou 21' d'un module de batterie, ainsi qu'une molette 56" montée sur ledit embout 51".

Cette extrémité inférieure présente ainsi un filetage pour les bornes femelles ou un taraudage pour les bornes mâles.

L'embout 51" comprend deux ou trois parties.

Ainsi, dans une première variante destinée à coopérer avec des bornes de type femelle 20 ou 21 de batterie, l'embout 51" comprend une tige 51"a, une pièce intermédiaire 51"b présentant un trou traversant s'étendant sur la hauteur de la pièce, et une pièce de contact 51"c présentant également un trou traversant.

La tige 51"a présente une extrémité supérieure surmontée d'une molette 511"a, et est de préférence filetée sur toute sa longueur, la tige 51"a s'insérant à travers les trous traversants des pièces intermédiaire 51"b et de contact 51"c. Les trous traversants des pièces intermédiaire 51"b et/ou de contact 51"c peuvent également présenter un taraudage ou un filetage (destiné à coopérer avec le filetage de la tige), la tige 51"a se vissant alors à travers lesdites pièces 51"b et/ou 51"c, puis dans la borne 20 ou 21 de la batterie. Ainsi, l'embout 51" est solidarisé par vissage sur la borne 20, 21, par l'intermédiaire de la tige 51"a. On notera qu'en position montée, la tige 51"a, la pièce intermédiaire 51"b et la pièce de contact 51"c sont disposés coaxialement les uns par rapport aux autres.

Les pièces intermédiaire 51"b et de contact 51"c, quant à elles, coopèrent l'une avec l'autre, mais également avec une cosse 31a du câble 31.

La pièce intermédiaire 51"b présente ainsi une forme extérieure sensiblement cylindrique avec un méplat 512"a s'étendant sur au moins une partie de la hauteur de ladite pièce 51"b.

La pièce intermédiaire 51"b présente également deux extrémités opposées, l'une des extrémités comportant deux méplats supplémentaires 512"b, tandis que l'autre extrémité présente une paroi dans laquelle est aménagée une gorge de retenue ouverte (la gorge étant située sur la face interne de cette paroi, non visible sur la figure 10).

La molette 56", généralement en matière plastique et présentant une forme sensiblement cylindrique, coiffe (ou entoure) la partie intermédiaire 51"b.

La molette 56" comprend ainsi également un trou traversant présentant un méplat s'étendant au moins sur une partie de la hauteur de la molette 56".

La pièce intermédiaire 51"b est donc configurée pour être insérée au moins en partie dans la molette 56" et pour que les méplats respectifs desdits éléments coopèrent, empêchant ainsi une rotation de la molette 56" par rapport à la pièce intermédiaire 51"b et inversement (ainsi en position montée, la rotation de la molette 56" entraine la rotation de la pièce intermédiaire 51"b). On notera que la molette 56" présente préférentiellement deux parties, une partie striée/rainurée permettant à un opérateur de tourner ladite molette 56" à la main et une partie hexagonale pour que l'opérateur puisse faire tourner la molette grâce à un outil dédié et contrôler précisément le couple de serrage.

De plus, la molette 56" comprend des perçages 57" aménagés pour être en regard des méplats 512"a et 512'b de la pièce intermédiaire 51"b et permettant à des moyens de fixation 57", tels que des vis à fond plat, d'être insérés pour solidariser la molette 56 " à la pièce intermédiaire 51"b. Ce montage permet notamment d'empêcher une translation longitudinale de la molette 56" par rapport à la pièce intermédiaire 51"b.

Plus particulièrement, la pièce de contact 51"c comprend une partie centrale 53" de forme sensiblement cylindrique dont les extrémités opposées sont respectivement surmontées d'une couronne 53"a (ou saillie de retenue) et d'une collerette 53"b. La partie centrale 53" présente par ailleurs un méplat 512"c.

La couronne 53"a de la pièce de contact 51"c se positionne dans la gorge de retenue de la pièce intermédiaire 51"b, prévenant ainsi la translation longitudinale de la pièce de contact 51"c par rapport à la pièce intermédiaire 51"b (il y a cependant un jeu entre la pièce intermédiaire et la pièce de contact, tant que l'embout n'est pas positionné de façon adéquate sur la borne de la batterie). De plus, le méplat 512"c de la pièce de contact 51"c, en position montée, coopère avec le méplat interne de la molette 56 empêchant la rotation de la pièce de contact 51"c par rapport à la molette 56 (mais également par rapport à la pièce intermédiaire 51"b).

Ainsi, en position montée, la cosse 31a du câble 31 entoure le corps principal 53" (plus particulièrement la partie sensiblement cylindrique du corps principal) et vient se positionner entre la collerette 53"b de la pièce de contact 51"c et la couronne 53"a de la pièce intermédiaire 51"b.

Ainsi, lorsqu'on veut solidariser la fiche de connexion 5" à une borne de type femelle d'une batterie, la cosse 31a est positionnée entre les pièces intermédiaire 51"b et de contact 51"c, la cosse 31a est alors sensiblement montée libre en rotation sur la partie sensiblement cylindrique du corps principal 53" et est bloquée en translation par ladite collerette 53" et la partie inférieure de la pièce intermédiaire 51"b.

Puis la tige 51"a est insérée, successivement, à travers la molette 56", la pièce intermédiaire 51"b, la cosse 31a et la pièce de contact 51"c. L'extrémité de la tige 51"a vient alors se fixer par vissage sur la borne 20 ou 21 de la batterie, le vissage de la tige 51"a s'effectuant par exemple à la main par l'intermédiaire de la molette 511"a.

Par la suite, on déplace (par exemple par vissage) le corps intermédiaire 51"b (et par extension la pièce de contact 51"c et la cosse 31a) en agissant sur la molette 56" jusqu'à ce que la collerette 53"b soit en contact avec la borne 20 ou 21 de la batterie. Dans cette position (finale), la cosse 31a n'est plus libre en rotation et est en contact avec les pièces intermédiaire 51"b et de contact 51"c de l'embout 51". Plus particulièrement, la pièce intermédiaire 51"b comprend, à l'extrémité comportant la gorge de retenue, un épaulement 512"c (s'étendant vers l'extérieur de la pièce intermédiaire) qui vient alors appuyer de façon homogène sur la cosse 31a et entrainer un contact mécanique homogène entre la cosse 31a et la collerette 53"b de la pièce de contact 53".

En effet, la tige 51"a, la pièce intermédiaire 51"b et la pièce de contact 51"c sont réalisés en un matériau électriquement conducteur (tel que du métal) et il est nécessaire que le contact électrique entre la cosse 31a du câble 31 et l'élément composant l'embout 51" soit le meilleur possible, afin de ne pas créer une résistance supplémentaire pouvant mener à la création d'un point chaud potentiellement dangereux pour l'utilisateur de ladite fiche de connexion.

Dans le cas présent, le présent exemple permet d'orienter le câble facilement selon les besoins de l'utilisateur jusqu'au vissage de l'embout 51", vissage simple et aisé permettant d'assurer un bon contact électrique entre ladite fiche et la borne d'une batterie.

Dans une variante non représentée de cet exemple, l'extrémité de la borne mâle 20', 21' peut également coopérer directement avec un filetage (ou un taraudage) complémentaire aménagé sur la paroi interne du trou traversant de la pièce intermédiaire 51"b. La borne 20', 21' s'insère à travers la pièce de contact 51"c et la cosse 31a, la molette 56" se vissant jusqu'au blocage de la rotation de la cosse 31a située entre la pièce de contact 51"c et la pièce intermédiaire 51"b. On notera que dans le cadre de cette variante de réalisation, l'embout 51" peut ne pas comporter de tige 51"a, néanmoins si c'est le cas, la tige ne s'étend pas nécessairement jusqu'à la borne de la batterie (mais de préférence sur une partie de la hauteur de la pièce intermédiaire 51"b).

Dans les variantes de réalisation pertinentes, la tige est surmontée d'une molette, par exemple réalisée en un matériau isolant électriquement, tel que du plastique, pour qu'en position montée (c'est-à-dire vissée dans la pièce intermédiaire), ladite molette de la tige recouvre le haut de la pièce intermédiaire limitant ainsi l'accès à la pièce intermédiaire métallique à l'utilisateur, diminuant ainsi les risques de faux contact, de court-circuit, ou d'une électrisation/électrocution de l'utilisateur.

Dans une autre variante non représentée, la molette 56" comprend une butée s'étendant en regard du méplat 512"c de la pièce de contact 51"c (ladite butée étant configurée pour s'étendre à travers la cosse 31a du câble 31 sans entraver la rotation de ladite cosse 31a autour du corps principal 53" de la pièce de contact 53").

## Revendications

1. Fiche de connexion électrique (5, 5') d'un câble électrique (3) à une borne (20, 21, 20', 21') électrique d'un module (2, 2') de batterie, comprenant :
- un embout (51, 51') conducteur comprenant, à une première extrémité des moyens (51) de liaison mécanique et électrique de ladite fiche avec ladite borne électrique, et étant pourvu à une deuxième extrémité d'une molette (56) d'actionnement en rotation dudit embout (51, 51') et
- un élément conducteur de connexion dudit câble électrique (3), pourvu de moyens de solidarisation mécanique et électrique dudit élément conducteur avec ledit câble électrique (3), et pourvu de moyens de liaison mécanique et électrique avec ledit embout (51, 51') assurant une liberté de rotation dudit embout (51, 51') par rapport audit câble ou à l'élément conducteur connecté audit câble, la solidarisation/désolidarisation desdits moyens de liaison de ladite fiche (5, 5') avec ladite borne (20, 20', 21, 21') étant réalisée par un mouvement de rotation imprimé par l'intermédiaire de ladite molette (56), sans entraîner en rotation au moins une partie de l'élément conducteur de connexion dudit câble électrique (3) et/ou ledit câble (3), ledit élément conducteur de connexion du câble (3) comprend une patte (52),
**caractérisée en ce que** l'embout (51, 51') forme à sa première extrémité un rebord (5111, 5111') d'une surépaisseur (511) qui forme ainsi une butée en regard et à distance de la molette (56, 56'), la patte (52) étant logé entre ladite butée (5111, 5111') et la molette (56, 56'),
et **en ce que** ladite fiche (5, 5') comprend des moyens de rappel élastique, disposés entre la molette (56, 56') et la patte (52), lesdits moyens de rappel élastique sont constitués par un ressort de pression (54) comprimant la patte (52) contre la butée (5111, 5111') en exerçant une force d'extension dans la direction axiale dudit embout (51, 51') de façon à mettre en tension lesdits moyens de liaison de l'embout (51, 51') avec la borne (20, 20', 21, 21'), tout en exerçant un effort de friction tendant à empêcher la rotation de ladite patte (52) de connexion dudit câble électrique (3) par rapport audit embout (51, 51') ;
ladite molette (56) étant conçue pour autoriser un mouvement de rotation dudit embout (51, 51') par rapport à ladite patte (52) en exerçant une force de rotation supérieure auxdites forces de friction.

2. Fiche de connexion électrique (5') selon la revendication 1, **caractérisée en ce que** lesdits moyens de rappel élastique sont constitués par un ressort hélicoïdal (54) de rappel monté en pression autour dudit embout (51') entre ladite molette (56) et ledit élément conducteur.

3. Fiche de connexion électrique (5, 5') selon l'une quelconques des revendications 1 ou 2, **caractérisée en ce que** ledit élément conducteur de connexion du câble (3) comprend une patte (52) comportant un premier orifice (522) de connexion audit câble (3), dans ladite première extrémité dudit élément conducteur, et un second orifice (521) de connexion audit embout (51, 51'), dans ladite seconde extrémité dudit élément conducteur.

4. Fiche de connexion électrique (5) selon l'une des revendications précédentes, **caractérisée en ce que** lesdits moyens de liaison dudit embout (51) avec ladite borne (20, 21) comprennent un filetage au niveau de ladite première extrémité dudit embout (51) apte à coopérer avec un taraudage complémentaire ménagé au niveau de ladite borne (20, 21)

5. Fiche de connexion électrique (5') selon l'une des revendications 1 à 4, **caractérisée en ce que** lesdits moyens de liaison dudit embout (51') avec ladite borne (20', 21') comprennent un taraudage (510') au niveau d'une extrémité dudit embout (51') apte à coopérer avec un filetage complémentaire ménagé au niveau de ladite borne (20', 21'), ledit embout (51') étant solidarisé à ladite borne (20', 21') par vissage sur ladite borne (20', 21').

6. Fiche de connexion électrique (5, 5') selon l'une quelconque des revendications précédentes, **caractérisée en ce que** ladite molette (56) est désolidarisable dudit embout (51, 51'), et **en ce que** l'embout (51, 51') comprend au moins un méplat (512), destiné à coopérer avec l'extrémité d'au moins une pièce de blocage vissée dans ladite molette (56).

7. Fiche de connexion électrique (5') selon la revendication précédente, **caractérisée en ce que** ledit embout (51') comprend un pion (58) formant ladite deuxième extrémité dudit embout (51'), ledit ressort hélicoïdal (54) de rappel étant monté en pression autour dudit pion (58), ledit pion comportant ledit au moins un méplat, destiné à coopérer avec l'extrémité d'au moins une pièce de blocage vissée dans ladite molette (56)

8. Fiche de connexion électrique (5, 5') selon les revendications 1 à 7, **caractérisée en ce que** la surface externe de ladite molette (56) présente des irrégularités de préhension, telles que des stries ou équivalent.

9. Kit de câblage de charge pour module (2, 2') de batterie comprenant un jeu d'au moins deux câbles électriques (3) de charge, muni chacun d'une fiche de connexion électrique (5, 5') selon l'une quelconque des revendications 1 à 8.

## Patentansprüche

1. Elektrischer Steckverbinder (5, 5') für ein Stromkabel (3) an ein elektrisches Anschlusselement (20, 21, 20', 21') eines Batteriemoduls (2, 2'), umfassend:
- einen Leiterverbindungsstift (51, 51'), umfassend an einem ersten Ende Mittel (51) zur mechanischen und elektrischen Verbindung des Steckverbinders mit dem elektrischen Anschlusselement, wobei er an einem zweiten Ende mit einem Betätigungsrad (56) zum Drehen des Verbindungsstiftes (51, 51') versehen ist, und
- ein leitendes Verbindungselement des Stromkabels (3), das mit Mitteln zur mechanischen und elektrischen Verbindung des leitenden Elements mit dem Stromkabel (3) versehen ist und mit Mitteln zur mechanischen und elektrischen Verbindung mit dem Verbindungsstift (51, 51') versehen ist, die eine Drehfreiheit des Verbindungsstiftes (51, 51') in Bezug zum Kabel oder zum mit dem Kabel verbundenen leitenden Element gewährleisten, wobei die Verbindung/Trennung der Verbindungsmittel des Steckverbinders (5, 5') mit dem Anschlusselement (20, 20', 21, 21') durch eine unter Vermittlung des Betätigungsrades (56) vorgegebene Drehbewegung erfolgt, ohne mindestens einen Teil des leitenden Verbindungselements des Stromkabels (3) und/oder das Kabel (3) in Drehung zu versetzen, wobei das leitende Verbindungselement des Kabels (3) eine Klaue (52) umfasst,
**dadurch gekennzeichnet, dass** der Verbindungsstift (51, 51') an seinem ersten Ende einen Rand (5111, 5111') mit einer Überhöhung (511) bildet, die auf diese Weise einen Anschlag gegenüber und in einem Abstand zu dem Betätigungsrad (56, 56') bildet, wobei die Klaue (52) zwischen dem Anschlag (5111, 5111') und dem Betätigungsrad (56, 56') angeordnet ist,
und dass der Steckverbinder (5, 5') elastische Rückstellmittel umfasst, die zwischen dem Betätigungsrad (56, 56') und der Klaue (52) angeordnet sind, wobei die elastischen Rückstellmittel von einer Druckfeder (54) gebildet sind, die die Klaue (52) gegen den Anschlag (5111, 5111') drückt, wobei sie eine Dehnungskraft in Axialrichtung des Verbindungsstiftes (51, 51') ausübt, um die Verbindungsmittel des Verbindungsstiftes (51, 51') mit dem Anschlusselement (20, 20', 21, 21') zu spannen, wobei eine Reibungskraft ausgeübt wird, die darauf hinwirkt, die Drehung der Verbindungsklaue (52) des Stromkabels (3) in Bezug zum Verbindungsstift (51, 51') zu verhindern; wobei das Betätigungsrad (56) dazu ausgebildet ist, eine Drehbewegung des Verbindungsstiftes (51, 51') in Bezug zur Klaue (52) zu gestatten, wobei eine Drehkraft ausgeübt wird, die größer als die Reibungskräfte ist.

2. Elektrischer Steckverbinder (5') nach Anspruch 1, **dadurch gekennzeichnet, dass** die elastischen Rückstellmittel von einer Spiralspannfeder (54) gebildet sind, die mit Druck um den Stift (51') zwischen dem Betätigungsrad (56) und dem leitenden Element montiert ist.

3. Elektrischer Steckverbinder (5, 5') nach einem der Ansprüche 1 oder 2, **dadurch gekennzeichnet, dass** das leitende Verbindungselement des Kabels (3) eine Klaue (52) aufweist, umfassend eine erste Öffnung (522) zur Verbindung mit dem Kabel (3) in dem ersten Ende des leitenden Elements und eine zweite Öffnung (521) zur Verbindung mit dem Stift (51, 51') in dem zweiten Ende des leitenden Elements.

4. Elektrischer Steckverbinder (5) nach einem der vorhergehenden Ansprüche, **dadurch gekennzeichnet, dass** die Verbindungsmittel des Stifts (51) mit dem Anschlusselement (20, 21) ein Gewinde im Bereich des ersten Endes des Stifts (51) aufweisen, das geeignet ist, mit einem komplementären Gewinde zusammenzuwirken, welches im Bereich des Anschlusselements (20, 21) vorgesehen ist.

5. Elektrischer Steckverbinder (5') nach einem der Ansprüche 1 bis 4, **dadurch gekennzeichnet, dass** die Verbindungsmittel des Stifts (51') mit dem Anschlusselement (20', 21') ein Gewinde (510') im Bereich eines Endes des Stifts (51') aufweisen, das geeignet ist, mit einem komplementären Gewinde zusammenzuwirken, welches im Bereich des Anschlusselements (20', 21') vorgesehen ist, wobei der Stift (51') mit dem Anschlusselement (20', 21') durch Schrauben auf das Anschlusselement (20', 21') verbunden wird.

6. Elektrischer Steckverbinder (5, 5') nach einem der vorhergehenden Ansprüche, **dadurch gekennzeichnet, dass** das Betätigungsrad (56) von dem Stift (51, 51') getrennt wird, und dass der Stift (51, 51') mindestens eine Abflachung (512) umfasst, die dazu bestimmt ist, mit dem Ende mindestens eines Feststellteils zusammenzuwirken, das in das Betätigungsrad (56) geschraubt ist.

7. Elektrischer Steckverbinder (5') nach dem vorhergehenden Anspruch, **dadurch gekennzeichnet, dass** der Stift (51') einen Zapfen (58) aufweist, der das zweite Ende des Stifts (51') bildet, wobei die Spiralspannfeder (54) mit Druck um den Zapfen (58) montiert ist, wobei der Zapfen die mindestens eine Abflachung umfasst, die dazu bestimmt ist, mit dem Ende mindestens eines in das Betätigungsrad (56) geschraubten Feststellteils zusammenzuwirken.

8. Elektrischer Steckverbinder (5, 5') nach den Ansprüchen 1 bis 7, **dadurch gekennzeichnet, dass** die Außenfläche des Betätigungsrades (56) Unregelmäßigkeiten zum Ergreifen, wie Rippen oder dergleichen, umfasst.

9. Ladekabelsatz für ein Batteriemodul (2, 2'), umfassend einen Satz von mindestens zwei Ladestromkabeln (3), die jeweils mit einem elektrischen Steckverbinder (5, 5') nach einem der Ansprüche 1 bis 8 versehen sind.

## Claims

1. Plug (5, 5') for electrically connecting an electrical cable (3) to an electrical terminal (20, 21, 20', 21') of a battery module (2, 2'), comprising:
- a conductive end fitting (51, 51') comprising, at a first end, means (51) for mechanically and electrically connecting said plug with said electrical terminal, and being provided at a second end with a knob (56) for rotating actuation of said end fitting (51, 51') and
- a conductive element for connecting said electrical cable (3), provided with means for mechanically and electrically connecting said conductive element with said electrical cable (3), and provided with means for mechanically and electrically connecting with said end fitting (51, 51') ensuring a freedom of rotation of said end fitting (51, 51') with respect to said cable or to the conductive element connected to said cable, the connection/disconnection of said means of connecting said plug (5, 5') with said terminal (20, 20', 21, 21') being implemented by a rotational movement imparted by means of said knob (56), without rotating at least a part of the conductive element for connecting said electrical cable (3) and/or said cable (3), said conductive element for connecting the cable (3) comprises a lug (52),
**characterised in that** the end fitting (51, 51') forms at its first end a rim (5111, 5111') with a protrusion (511) which thus forms a stop facing and away from the knob (56, 56'), the lug (52) being housed between said stop (5111, 5111') and the knob (56, 56'),
and **in that** said plug (5, 5') comprises elastic return means, disposed between the knob (56, 56') and the lug (52), said elastic return means consist of a pressure spring (54) compressing the lug (52) against the stop (5111, 5111') by exerting an extension force in the axial direction of said end fitting (51, 51') so as to tension said means for connecting the end fitting (51, 51') with the terminal (20, 20', 21, 21'), while exerting a frictional force tending to prevent the rotation of said lug (52) for connecting said electrical cable (3) with respect to said end fitting (51, 51');
said knob (56) being designed to permit a rotational movement of said end fitting (51, 51') relative to said lug (52) by exerting a rotational force greater than said frictional forces.

2. Electrical connection plug (5') according to claim 1, **characterised in that** said elastic return means consist of a helical return spring (54) mounted under pressure around said end fitting (51') between said knob (56) and said conductive element.

3. Electrical connection plug (5, 5') according to either one of claims 1 or 2,
**characterised in that** said conductive element for connecting the cable (3) comprises a lug (52) including a first orifice (522) for connecting to said cable (3), in said first end of said conductive element, and a second orifice (521) for connecting to said end fitting (51, 51'), in said second end of said conductive element.

4. Electrical connection plug (5) according to one of the preceding claims, **characterised in that** said means for connecting said end fitting (51) with said terminal (20, 21) comprise a thread at said first end of said end fitting (51) capable of cooperating with a complementary tapping provided at said terminal (20, 21)

5. Electrical connection plug (5') according to any one of claims 1 to 4, **characterised in that** said means for connecting said end fitting (51') with said terminal (20', 21') comprise a tapping (510') at an end of said end fitting (51') capable of cooperating with a complementary thread provided at said terminal (20', 21'), said end fitting (51') being secured to said terminal (20', 21') by screwing onto said terminal (20', 21').

6. Electrical connection plug (5, 5') according to any one of the preceding claims, **characterised in that** said knob (56) is detachable from said end fitting (51, 51'), and **in that** the end fitting (51, 51') comprises at least one flat (512), intended to cooperate with the end of at least one locking part screwed into said knob (56).

7. Electrical connection plug (5') according to the preceding claim, **characterised in that** said end fitting (51') comprises a pin (58) forming said second end of said end fitting (51'), said return helical spring (54) being mounted under pressure around said pin (58), said pin including said at least one flat, intended to cooperate with the end of at least one locking part screwed into said knob (56)

8. Electrical connection plug (5, 5') according to claims 1 to 7, **characterised in that** the outer surface of said knob (56) has gripping irregularities, such as grooves or equivalent.

9. Charging-wiring kit for a battery module (2, 2') comprising a set of at least two charging electrical cables (3), each provided with an electrical connection plug (5, 5') according to any one of claims 1 to 8.
